Europäisches Patentamt

European Patent Office

Office européen des brevets

(11) Veröffentlichungsnummer: **0 487 942 A2**

## (12) EUROPÄISCHE PATENTANMELDUNG

(21) Anmeldenummer: **91118774.8**

(22) Anmeldetag: **04.11.91**

(30) Priorität: **26.11.90 DE 4037583**

(43) Veröffentlichungstag der Anmeldung:
**03.06.92 Patentblatt 92/23**

(84) Benannte Vertragsstaaten:
**DE FR GB NL**

(51) Int. Cl.⁵: **G06F 15/20**

(71) Anmelder: **SIEMENS AKTIENGESELLSCHAFT**
**Wittelsbacherplatz 2**
**W-8000 München 2(DE)**

(72) Erfinder: **Rosen, Roland**
**Am Ländtbogen 6**
**W-8036 Herrsching(DE)**
Erfinder: **Schless, Peter**
**Schönstrasse 80 a**
**W-8000 München 90(DE)**
Erfinder: **Stieber, Harald**
**Friedrich-Ebert-Strasse 28**
**W-8400 Regensburg(DE)**
Erfinder: **Kuhn, Karl-Josef**
**Erasmusstrasse 8**
**W-8000 München 83(DE)**

(54) **Verfahren zur komprimierten Speicherung von Datensätzen und zur Erzeugung von Datensätzen aus den komprimierten Datensätzen.**

㊼ In der Datenverarbeitung kommen häufig große Mengen von Datensätzen vor, die sich nur in einzelnen Datenworten unterscheiden. Diese Datensätze kann man in vielen Fällen aus einem einzigen Datenmuster - welches Platzhalter enthält - erzeugen, indem man für die Platzhalter Werte einsetzt. Ein Beispiel ist das Testen von Software. Hier müssen dem zu prüfenden Programm im großen Umfang Testfälle angeboten werden, die sich nur an wenigen Stellen voneinander unterscheiden. Wenn alle unterschiedlichen Testfälle abgespeichert werden müßten, wäre ein großer Speicherbedarf gegeben. Um dies zu vermeiden, werden die Daten, die gleiche Bedeutung haben, aber einen änderbaren Wert erhalten können, durch einen Platzhalter ersetzt. Aus mindestens einem Platzhalter werden Datenmuster gebildet und in einer Liste abgespeichert, welchen Wert die Platzhalter annehmen können und welche Werte eines Platzhalters mit Werten von anderen Platzhaltern kombinierbar sind. Auf dieser Liste werden Datensätze dadurch erzeugt, daß in die Datenmuster die Werte nach der Liste eingesetzt werden. Es ist zweckmäßig, die Liste in Form einer Matrix anzuordnen, wobei die Zeilen die Werte der Platzhalter angeben, während in den Spalten Markierungen enthalten sind, die zeigen, welche Platzhalterwerte miteinander kombinierbar sind.

In der Datenverarbeitung kommen häufig große Mengen von Datensätzen vor, die sich nur in einzelnen Datenworten unterscheiden. Diese Datensätze kann man in vielen Fällen aus einem einzigen Datenmuster - welches Platzhalter enthält - erzeugen, indem man für die Platzhalter Werte (das sind die sich unterscheidenden Datenworte) einsetzt. Dieses Problem existiert insbesondere beim Test von Software. Dabei fallen in großem Umfang Testfälle an, die sich nur an wenigen Stellen voneinander unterscheiden. Die Anzahl solcher Testfälle kann enorm sein. Wenn ein zu testender Aufruf z.B. fünf Parameter enthält und für jeden Parameter zehn Werte getestet werden, so ergeben sich $10^5$ Kombinationsmöglichkeiten.

Die der Erfindung zugrundeliegende Aufgabe besteht darin, ein Verfahren zur komprimierten Darstellung derartiger Datensätze und zur Erzeugung von Datensätzen aus solchen komprimierten Datensätze anzugeben. Diese Aufgabe wird gemäß dem Verfahren nach Anspruch 1 gelöst.

Datenworte gleicher Bedeutung, aber änderbarem Wert, werden somit Platzhalter zugeordnet. Weiterhin wird in einer Liste angegeben, inwieweit die Werte der verschiedenen Platzhalter miteinander kombinierbar sind.

Besonders günstig ist es, wenn die Liste eine Matrix bildet, bei der die Zeilen den Werten der Platzhalter zugeordnet sind und die Spalten Markierungen enthalten, die festlegen, welcher Wert eines Platzhalters mit welchen Werten von anderen Platzhaltern kombinierbar sind. Neue Kombinationsmöglichkeiten können hier dadurch geschaffen werden, daß eine zusätzliche Spalte an die Matrix angefügt wird.

Das Erzeugen von Datensätzen erfolgt dann dadurch, daß in das Datenmuster die durch die Matrix festgelegten Werte eingefügt werden. Die Datensätze werden z.B. der zu prüfenden Software zugeführt.

Der Vorteil des Verfahrens besteht darin, daß nicht mehr die große Anzahl von unterschiedlichen Datensätzen gespeichert werden muß, sondern nur noch das Datenmuster und die Matrix, in der die Werte für die Platzhalter und die zu erzeugenden Kombinationen von den Werten angegeben werden. Diese Komprimierung führt zu einer erheblichen Einsparung an Speicherplatz und ermöglicht es trotzdem eine große Anzahl unterschiedlicher Datensätze zu erzeugen.

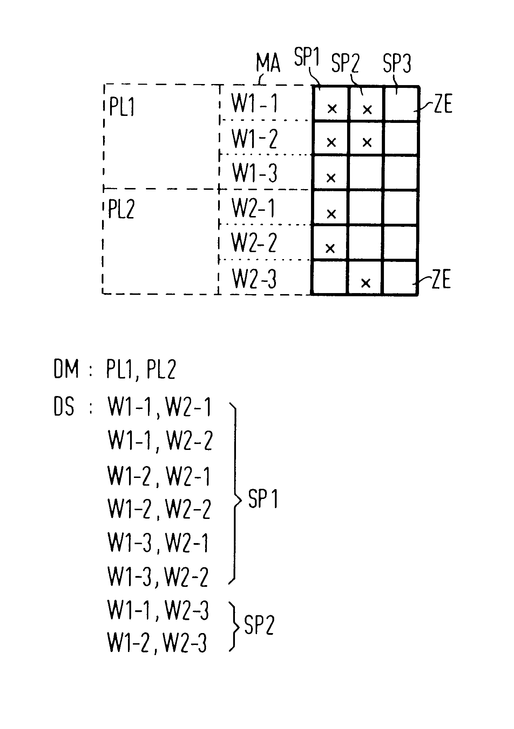

Mit Hilfe der Figur wird die Erfindung weiter erläutert. Es ist eine Matrix MA dargestellt, die zur komprimierten Speicherung der Datensätze verwendet wird. Im Ausführungsbeispiel ist ein Datenmuster angegeben, das z.B. aus Platzhaltern PL1, PL2 besteht.

Jeder Platzhalter PL steht dabei für Werte, die gleiche Bedeutung haben. Die Bedeutung des Platzhalters PL1 könnte z.B. der Vorname einer Person sein, die des Platzhalters PL2 z.B. dessen Nachname. Vorname und Nachname können unterschiedliche Werte haben, also unterschiedliche Namen sein. Ihre Bedeutung bleibt jedoch gleich, und sie können deswegen durch Platzhalter PL ersetzt werden.

Dem Platzhalter PL1 (z.B. Vorname) können unterschiedliche Werte W1-1, W1-2 und W1-3 zugeordnet werden. Entsprechendes gilt für den Platzhalter PL2 (z.B. Nachname). Diesem sind z.B. die Werte W2-1, W2-2, W2-3 zugeordnet. Die Werte W sind dabei den Zeilen ZE der Matrix zugeordnet. Mit Hilfe der Platzhalter PL1 und PL2 können nun Datenmuster DM gebildet werden, z.B. ein Datenmuster bestehend aus einer Aneinanderfügung des Platzhalters PL1 und des Platzhalters PL2 (Aneinanderfügung von Vorname und Nachname). Die Frage, welche Werte W1 des Platzhalters PL1 mit welchen Werten W2 des Platzhalters PL2 kombinierbar sind, ergibt sich nun aus den Spalten SP1, SP2, SP3 der Matrix. Durch die Markierungen in den Spalten SP wird also festgelegt, welche Werte W1 und W2 unmittelbar aneinandergereiht werden, um die Datensätze DS aus dem Datenmuster DM zu bilden. Das heißt, aus dem Datenmuster DM werden durch Einsetzen der Werte entsprechend der Matrix Datensätze DS gebildet. Aus der Figur ist erkennbar, welche Kombinationen der Werte W1 und W2 der Matrix entnommen werden können. Es ist zu sehen, daß beim Ausführungsbeispiel der Figur acht unterschiedliche Datensätze DS gebildet werden können. Durch Anfügung weiterer Spalten SP ist es möglich, weitere Kombinationen zwischen den Werten W1 und W2 festzulegen und damit weitere Datensätze DS zu bilden.

Unter Verwendung eines einfachen Beispieles, der Konstanten faltung bei einem Pascal Compiler, wird die Erfindung weiter erläutert. Zur Erzeugung der Datensätze kann ein Programm verwendet werden, das nach folgenden in der Tabelle 1 angegebenen Schema aufgebaut ist:

```
Tabelle 1
&if prelude
program c_folding (output);
     function value (x: integer): integer;
          begin
          value : = x
          end;
&endif
begin
&if body
   if ((value(left)opvalue(right))< >((left)op(right)))
then


          writeln ('Fehler im Test Nummer: test nr');
   &endif
   &if postlude
   end
   &endif
```

Im Vorspann zwischen "&if prelude" und dem ersten "&endif") ist der Programmname enthalten und weitere für die Funktion der Erfindung nicht interessierende Anweisungen.

In dem body (zwischen "&if body und dem nächsten "&endif) sind die Anweisungen enthalten, die das Datenmuster bilden und die dazu führen, daß die entsprechenden Datensätze erzeugt werden. Das Datenmuster enthält die Platzhalter "left", "op" und "right". Die Anweisungen geben weiter an, daß für den Fall, daß die in der Anweisung angegebene Bedingung nicht erfüllt ist, auf dem Bildschirm 'Fehler im Test Nr.' unter Angabe der entsprechenden Testnummer ausgegeben wird.

Im Nachspann (zwischen "&if postlude und dem letzten "&endif") sind die das Programm beendenden Anweisungen enthalten.

Dieses Schema wird ergänzt durch die in der Tabelle 2 angegebene Matrix.

Tabelle 2

|       |        | SP1 | SP2 |
|-------|--------|-----|-----|
| left  | '0'    | 1   | 2   |
|       | '1'    | 1   | 2   |
|       | '-1'   | 1   | 2   |
| right | '0'    | 1   |     |
|       | '1'    | 1   | 2   |
|       | '-1'   | 1   |     |
| op    | ' + '  | 1   |     |
|       | '-'    | 1   |     |
|       | '*'    | 1   |     |
|       | 'div'  |     | 2   |
|       | 'mod'  |     | 2   |

Diese Matrix legt fest, welche Werte die Platzhalter "left", "op" und "right" annehmen können. Der Platzhalter "left" kann z.B. die Werte "0","1" und "-1" annehmen. Entsprechendes gilt für den Platzhalter "right". Der Platzhalter "op" kann sein " + ", "-", "*", "div" und "mod". Es ist zu sehen, daß der Platzhalter "op" durch Rechenzeichen ersetzt werden kann. Die Spalten der Matrix geben jetzt an, welche Werte der Platzhalter mit welchen Werten anderer Platzhalter kombinierbar sind. Dazu sind in den Spalten Markierungen enthalten, die im Ausführungsbeispiel Ziffern sind. Mit Hilfe der Spalten wird also bestimmt, welche Werte der Platzhalter in das Datenmuster des Schemas nach Tabelle 1 einsetzbar sind. Damit werden Datensätze gebildet, die zur Prüfung eines Programms, z.B.eines Pascal Compilers verwendbar sind. Derartige Datensätze werden entsprechend

```
Tabelle 3 erzeugt:


program c_folding (output);
    function value (x: integer): integer
    begin
        value : = x
    end;
begin


    if ((value(o)+value(0))<>((0)+(0)))
    then
        writeln ('Fehler im Test Nummer: 1');


    if ((value(0)-value(0))<>((0)-(0)))
    then
        writeln ('Fehler im Test Nummer 2');


    if ((value(0)*value(0))<>((0)*(0)))
    then
        writeln ('Fehler im Test Nummer: 3');
usw.
```

Mit Hilfe des Programmschemas nach Tabelle 1 wird somit im ersten Testfall an die Stelle der Platzhalter "left" und "right" jeweils eine "0" eingesetzt und der Platzhalter "op" durch ein Pluszeichen ersetzt. Entsprechend werden weitere Testfälle gebildet, einfach durch Ersetzen der Platzhalter durch die in der Tabelle 2 angegebenen Werte, die entsprechend den Spalten miteinander kombinierbar sind. Beispiele ergeben sich aus der Tabelle 3.

Es ist zu sehen, daß die Anweisung neben den Platzhaltern noch viel Text enthält, der durch die verwendete Programmiersprache bedingt ist.

Die Datenworte, die in diesem Beispiel verwendet werden, sind Parameter, die eine bestimmte Bedeutung haben, aber einen änderbaren Wert annehmen können. Diese Datenworte werden also durch die Platzhalter "left", "right" und "op" ersetzt. Die verschiedenen Werte, die von diesen Platzhaltern angenommen werden können, sind in der Matrixtabelle 2 angegeben, aus der weiterhin entnommen werden kann, und zwar aus den Spalten SP, welche Werte der Platzhalter mit welchen Werten anderer Platzhalter entsprechend dem Datenmuster kombinierbar sind. Das Datenmuster ist in der Anweisung der Tabelle 2 festgelegt und ist dem Anwendungsfall angepaßt. Statt der Anweisung könnte bei einem anderen Anwendungsfall das Datenmuster lediglich durch Aneinanderfügung von zwei Platzhaltern PL1 und PL2 festgelegt sein. Dann würden entsprechend der Figur lediglich die Werte zweier Platzhalter aneinandergereiht werden.

Das Ausführungsbeispiel der Tabelle 3 zeigt auch, wie z.B. ein Compiler überprüft werden kann. Das Programm entsprechend Tabelle 3 wird dem Compiler zugeführt und von diesem in Maschinensprache übersetzt. Dabei führt der Compiler selbst die auf der rechten Seite der Anweisung stehende Operation aus. Das Ergebnis wird mit dem Ergebnis verglichen, der von dem übersetzten Programm der Tabelle 3 ausgeführt wird. Wenn das vom Compiler ermittelte Ergebnis dem Ergebnis entspricht, das das übersetzte Programm ausgeführt hat, dann arbeitet der Compiler bei dieser Operation richtig. Ist dies dagegen nicht der Fall, dann wird gemäß Programm Tabelle 3 ausgegeben "Fehler im Text Nummer: ".

**Patentansprüche**

1. Verfahren zur komprimierten Speicherung von Datensätzen und zu Erzeugung von Datensätzen aus den komprimierten Datensätzen mit den Schritten:
   - Datenworte, die gleiche Bedeutung haben, denen aber ein änderbarer Wert zugeordnet wird, werden jeweils durch einen Platzhalter (PL) ersetzt,
   - es werden Datenmuster (DM) aus mindestens einem Platzhalter (PL) gebildet und in einer Liste abgespeichert, welche Werte (W) der Platzhalter miteinander kombinierbar sind,
   - es werden Datensätze (DS) dadurch erzeugt, daß in die Datenmuster (DM) die Werte (W) nach der Liste eingesetzt werden.

2. Verfahren nach Anspruch 1 mit einer matrixförmig aufgebauten Liste, die in Zeilen die den Platzhaltern (PL) zugeordneten Werte (W) und in Spalten (SP) Markierungen enthält, die festlegen, welcher Wert eines Platzhalters mit welchen Werten von anderen Platzhaltern kombinierbar sind.

3. Verfahren nach Anspruch 2, bei dem die Anzahl der Datensätze (DS) dadurch erhöht wird, daß eine neue Spalte (SP) mit Markierungen für kombinierbare Werte von Platzhaltern der bisherigen Matrix angefügt wird.

4. Testverfahren für ein Programm unter Verwendung des Verfahrens nach einem der Ansprüche 1 bis 3, bei dem die Datensätze (DS) Eingabewerte des zu prüfenden Programms sind.

DM : PL1, PL2

DS : W1-1, W2-1  
    W1-1, W2-2  
    W1-2, W2-1  
    W1-2, W2-2  } SP1  
    W1-3, W2-1  
    W1-3, W2-2  

    W1-1, W2-3  } SP2  
    W1-2, W2-3